# EUROPEAN PATENT APPLICATION

(11) **EP 4 592 591 A1**
(43) Date of publication of application: **30.07.2025**
(21) Application number: 24154310.7
(22) Date of filing: 29.01.2024
(51) Int. Cl.: F21V 23/00, H02G 3/06, H02G 15/007, F16B 2/06

(54) **CABLE RESTRAINT UNIT AND LUMINAIRE PROVIDED THEREWITH**

(71) Applicant: Zumtobel Lighting GmbH, 6850 Dornbirn (AT)
(72) Inventor: LADSTÄTTER, Gerald, 6851 Dornbirn (AT); INCE, Matthew, 6851 Dornbirn (AT)
(74) Representative: Kiwit, Benedikt

(57) **Abstract**

The present invention is directed to a cable restraint unit (1), comprising a base element (2) having a fixing section (20) to attach the cable restraint unit (1) to a luminaire body (11), and a support section (21). The cable restraint unit (1) further comprises a clamping element (3) having a curved section (30) facing the support section (21) and being bulged away from it so as to delimit a cable guide opening (4) therebetween for guiding through cables (C) along a cable guide axis (Xc). The clamping element (3) is connected to the base element (2) in a movable manner along a moving axis (Xm) so as to selectively change the distance (D) between the support section (21) and the curved section (30) and thus selectively vary the size of the cable guide opening (4). The present invention is further directed to a luminaire (10), comprising a luminaire body (11), and the cable restraint unit (1) according to the present invention being attachable to the luminaire body (11) by the fixing section (20). The present invention is also directed to method for providing a luminaire body (11) with the cable restraint unit (1).

## Description

The present invention relates to a cable restraint unit for a luminaire as well as a luminaire having a luminaire body and the cable restraint unit.

Luminaires are widely used in many different configurations. For operating and/or controlling luminaires, current and/or data is transferred to and from the luminaire via a cable connection. Corresponding cables are guided out of the luminaire to a source or connection point. To avoid stresses affecting the connection of the cable to the luminaire, cable restraints, also called strain relief, are used, by which the cables are relatively fixed to, e.g., a luminaire body.

There exist longitudinal luminaires, like trunking systems (e.g. the Applicant's TECTON system). These trunking systems have at least one or a plurality of trunkings arranged usually in a row to obtain a desired length. At at least one or a plurality of positions, cables are guided into and out of the luminaire (e.g. trunking). Often, different types and diameters of cables are needed, which are guided into and out of the luminaire body at the same position. With common strain relieves, it is difficult to secure a number of cables with different diameters. Hence, strain relieves are provided for each diameter of cables or an individual strain relief is used for each cable. Also, attachment of the strain relief can be cumbersome.

It is thus an object of the present invention to provide a strain relief (in the following also referred to as cable restraint unit) as well as a luminaire provided therewith which allow for an easy mechanical connection as well as an easy and safe securing even of a number of cables irrespective of their cable diameter.

This object is solved by the subject-matter of the independent claims. The dependent claims study further the central idea of the present invention.

According to a first aspect the present invention is directed to a strain relief (in the following also referred to as cable restraint unit). The cable restraint unit comprises a base element. The base element comprises a fixing section for attaching the cable restraint unit to a luminaire body. Moreover, the base element comprises a support section. The cable restraint unit further comprises a clamping element having a curved section facing towards the support section and being bulged away from the support section so as to delimit a cable guide opening therebetween for guiding through cables along a cable guide axis. The clamping element is connected to the base element in a movable manner along a moving axis so as to selectively change the distance between the support section and the curved section and thus selectively vary the size of the cable guide opening.

The cable restraint unit of the present invention allows for an easy attachment thereof to a luminaire body due to the presence of the defined fixing section. Moreover, by providing the curved section, the cable guide opening allows for an effective collection of the cables guided through the cable guide opening in a most compact manner, so that even cables with different diameters can be securely and firmly received and secured - e.g. clamped - by the cable restraint unit. The unique combination of an easy attachment at a desired location of a luminaire body on the one hand and an easy and effective clamping of any desired cable and cable combination allows for an overall easy, secure and effective strain relief for a luminaire.

The moving axis my extend orthogonal to the cable guide axis. Hence, the cables can be effectively clamped as being vertically guided through the cable guide opening.

The clamping element may further comprise a guide section for movably connecting the clamping element to the base element in a guided manner. Hence, the functionality, particularly the clamping movement, can thus be facilitated.

The guide section may comprise two legs both extending parallel to the moving axis. Hence, a stable and securely guided clamping element can be provided.

The two legs preferably laterally delimit the cable guide opening between the base element, preferably the support section, and the curved section. Hence, the cable guide opening can be easily defined by the two elements, i.e. the base element and the clamping element. In a preferred embodiment, the two legs together with the support section and the curved section preferably define a circumferentially closed lateral delimitation of the cable guide opening, thus avoiding any cables slipping out of the cable guide opening once being guided there through.

The guide section, preferably the legs, may preferably comprise threaded sections penetrating the support section so as to be fixed and movably adjusted by a counter element, preferably a counter nut, at a side opposite to the cable guide opening with respect to the support section. By means of these threaded sections, a very accurate and defined movement of the clamping element relative to the base element can be obtained.

In a preferred embodiment, the clamping element is a U-bolt. Hence, a commonly known element can be used, thus reducing the costs of the cable restraint unit.

The support section may comprise two support elements being offset along the moving axis, both being penetrated by the clamping element, preferably the legs. A first one of the support elements (in the following also referred to as the first support element) delimits the cable guide opening, and a second one of the support elements (in the following also referred to as the second support element) can be positioned opposite to the cable guide opening with respect to the first support element to support the counter element at a side opposite to the first support element. The two support elements allow for an accurate support of the clamping element as well as a likewise accurate movability thereof.

The clamping element, preferably at least its curved section and, if present, preferably also its guide section, is/are preferably jacketed with a sleeving. Such a sleeving allows for protecting the cables guided through the cable guide opening when being firmly secured or clamped by the cable restraint unit. Also, the sleeving may isolate the cable restraint unit or at least the clamping element against the cables, thus increasing safety of the cable restraint unit.

The sleeving may be supported against the support section so as to be biased when moving the curved section and the support section towards each other. The sleeving may thus be used as a kind of spring element to bias the clamping element in the open position to thus facilitate insertion of cables.

The cable restraint unit may further comprise an isolation element which is positioned between the support section and the cable guide opening. This isolation element allows for protecting the cables against the base element and/or provide electrical isolation.

The base element may comprise a base body connecting, preferably integrally connecting, the fixing section and the support section. Hence, the base element has a stable and rigid layout to allow for a secure attachment of the cable restraint unit to a luminaire body.

The base body may comprise a side wall section, and the fixing section can be provided at a distal tip end of the side wall section with respect to the support section. Hence, the fixing section can be provided in an exposed manner, thus allowing for an effective attach ability. Also, the side wall section allows for the cable restraint unit be designed in a manner that it can be attached to any desired luminaire body, as the side wall section can be formed in any desired way, thus increasing the applicability of the cable restraint unit.

The base element, preferably its base body, may comprise an attachment section for attaching a luminaire suspension. Hence, the cable restraint unit, once being attached to the luminaire body, may also be used as a fixing point for a luminaire suspension, thus increasing flexibility of a luminaire being provided with such a cable restraint unit, while reducing the number of parts and increasing compactness.

The base element may be integrally formed, preferably as a one-piece element, from a metal sheet, preferably from a spring steel sheet. Hence, the cable restraint unit can be easily made with commonly known techniques.

The base element may be a snap-on element, which allows for a very easy attachment of the cable restraint unit to a luminaire body; preferably without the need of using any tools at least for the attachment.

When viewed along the moving axis, the base body may have a substantially U-shaped cross-section delimiting a space for receiving part of the clamping element and/or of the luminaire body. The base body may thus have a likewise compact and rigid shape. Also, the U-shaped form allows for creating the space, which can be used to securely support and cover the clamping element. Also, this space for receiving at least part of the luminaire body may also allow for a compact attachment of the cable restraint unit thereto.

The side wall section may preferably comprise two side walls being arranged opposite with respect to the space. The side walls may be connected by a connection wall which together with the side walls define the U-shaped cross-section of the base body. The base element can thus be easily and rigidly formed. Also, the side walls allow for a stable support of the fixing section.

The fixing section may be designed such that the cable restrained unit can be attached to a luminaire body by an attachment movement along an attachment axis being parallel to the cable guide axis or orthogonal to the moving axis. Hence, a simple attachment movement is sufficient to attach the cable restraint unit to a luminaire body, thus facilitating the assembly. Also, additional use of tools can be avoided.

The fixing section may preferably comprise or is a clip or snap element. Hence, the fixing section can be provided in a simple way while allowing for an effective attachability.

The fixing section may comprise (at least) two fixing elements, preferably (at least) one at each side wall if present. The fixing elements may be offset from each other so as to receive part of a luminaire body therebetween. The redundant provision of fixing elements allows for a secure attachment of the cable restraint unit. Having these fixing elements provided at each side wall and/or being offset from each other, as defined, this allows for a highly effective attachability of the cable restraint unit. Also, if provided as a snap-on connection, the cable restraint unit can be highly effectively attached to a desired luminaire body.

The fixing section may be designed to allow for a slidable movement of the cable restraint unit when being attached by the fixing section. Hence, the cable restraint unit may be securely attached and still positioned at a desired position, if needed. Preferably, the slidable movement is (oriented) orthogonal to the attachment axis for attaching the cable restraint unit by the fixing section. Hence, the cable restraint unit may be attached in an effective manner along an attachment axis, while then the slidable movement orthogonal thereto allows for a positional adjustment of the cable restraint unit without affecting the attachability thereof.

The fixing section may comprise a profiled section which extends parallel to the moving axis; preferably with a constant cross-sectional profile. The profiled section allows for a secure attachment of the cable restraint unit as having a comparatively large connection or fixing area. In case of a constant cross-sectional profile, the cable restraint unit may be easily provided in a way to allow for the mentioned slidable movement and flexible positional provision.

The cable restraint unit may further comprise a fixing part for firmly fixing the cable restraint unit to the luminaire body when being attached thereto by the fixing section. Hence, as desired, the cable restraint unit may be attached in a manner that it is firmly fixed in the attached and, if at all, adjusted position. This additional fixing part provides a tooled access as, for instance, specified by the standard BSI60598.

The fixing part may be arranged to penetrate the base element to selectively extend therein, preferably into the space if present. Hence, the fixing part can be easily adjusted. By penetrating the base element, the fixing part may enter a space in which the luminaire body is provided, so that the cable restraint unit can be easily and firmly fixed relative to the luminaire body or other part attached thereto.

The fixing part may be or may comprise a screw thus providing an easy and known feature as the fixing part.

According to another aspect, the present invention is further directed to a luminaire comprising a luminaire body as well as the cable restraint unit according to the present invention as defined herein above, wherein the cable restraint unit is attachable or attached to the luminaire body by the fixing section.

Hence, a luminaire can be easily provided with the cable restraint unit, thus applying the advantages already discussed herein above to the luminaire.

The luminaire body may be a longitudinal trunking and/or may be a profiled luminaire body, preferably with a constant cross-sectional body profile. Hence, the cable restraint unit can be easily used even for a longitudinal luminaire body, to which common strain reliefs are usually cumbersome to attach, to secure cables.

The cable restraint unit may be attachable or attached to the luminaire body in a way that the cable guide opening can be aligned with a through opening of the luminaire body, when seen in the direction of the cable guide axis. Hence, once being attached, the cable restraint unit allows for an optimised guidance of the corresponding cables. Hence, the cables can be effectively protected against bending.

The cable restraint unit may be attachable or attached to the luminaire body by the fixing section in a manner so as to be movable parallel to the moving axis. Hence, once being attached, the cable restraint unit allows for an easy adjustment of its position to thus easily reach a defined position. For instance, this defined position may be a position in which the cable guide opening is aligned with the through opening of the luminaire body to thus allow for an optimised guidance of the corresponding cables.

The cable restraint unit may be attachable or attached to the luminaire body by the fixing section by way of a snap-on connection. Hence, the cable restraint unit can be easily and highly effectively attached to the luminaire body.

The cable restraint unit, when being attached to the luminaire body by the fixing section, may be secured relatively to the luminaire body, preferably by the fixing part. Hence, the cable restraint unit may be securely fixed in the desired position. If using the fixing part, a tooled access can be provided as often specified in or required by standards.

According to another aspect, the present invention is further directed to a method for providing a luminaire body with a cable restraint unit. The method comprises the following steps:
In a first step, a luminaire according to the present invention as defined herein above is provided. The luminaire comprises the luminaire body as well as the cable restraint unit as also described in detail herein above.
In a second step, the cable restraint unit is attached to the luminaire body by the fixing section. This can be a snap-on connection.
In a first optional step, the attached cable restraint unit may be slid relative to the luminaire body by the fixing section - i.e. by using the fixing section as a guide element -, thus allowing for a desired adjustment of the position of the cable restraint unit.
In a second optional step, the cable guide opening may be aligned with a cable through opening of the luminaire body, thus allowing for an optimal guidance of the cables to be secured by the cable restraint unit. The alignment of the second optional step may be obtained by the sliding of the first optional step.
In a third optional step, the cable restraint unit may be fixed relative to the luminaire body, preferably by the fixing part. Hence, the cable restraint unit can be firmly fixed to the luminaire body, and preferably provides tooled access, e.g. according to a specified standard.
In a third step, cables are guided through the cable guide opening along the cable guide axis, so that the cables to be secured by the cable restraint unit are ready to be clamped / secured by the cable restraint unit.
In a fourth step, the clamping element is moved along the moving axis so as to reduce the distance between the support section and the curved section and thus to reduce the size of the cable guide opening to clamp the cables being guided through the cable guide opening between the curved section and the support section, thus securing the cables by the cable restraint unit.

Further features and advantages of the present invention will now be described with reference to the drawings of the enclosed figures.
- Fig. 1: shows a perspective partial view of a luminaire according to an embodiment of the present invention with a cable restraint unit according to an embodiment of the present invention.
- Fig. 2: shows a perspective exploded view of the cable restraint unit of Fig. 1,
- Fig. 3: shows a perspective partial view of the luminaire of Fig. 1 with the cable restraint unit in its initial position,
- Fig. 4: shows a perspective partial view of the luminaire of Fig. 3 with cables guided through the cable guide opening,
- Fig. 5: shows a perspective partial view of the luminaire according to Fig. 4 (without the luminaire body for ease of depiction) with all cables being guided through the cable guide opening and the clamping element in the closed position thus clamping / securing the cables by the cable restraint unit,
- Fig. 6: shows a top view of the luminaire of Fig. 5,
- Fig. 7: shows a perspective partial view of the luminaire according to Fig. 5 with a luminaire suspension attached to the cable restraint unit and, here, also with a cable gripper for securing the cables to the luminaire suspension,
- Fig. 8: shows a front cross-sectional view of the luminaire according to Fig. 3, and
- Fig. 9: shows a perspective cross-sectional view of the luminaire according to Fig. 1.

The figures show an embodiment of a cable restraint unit 1 as well as a luminaire 10 provided therewith. In the following, the cable restraint unit 1 will be described.

The cable restraint unit 1 comprises a base element 2 and a clamping element 3, as shown in all figures.

The base element 2 may be integrally formed, preferably as a one-piece element, from a metal sheet, preferably from a spring steel sheet.

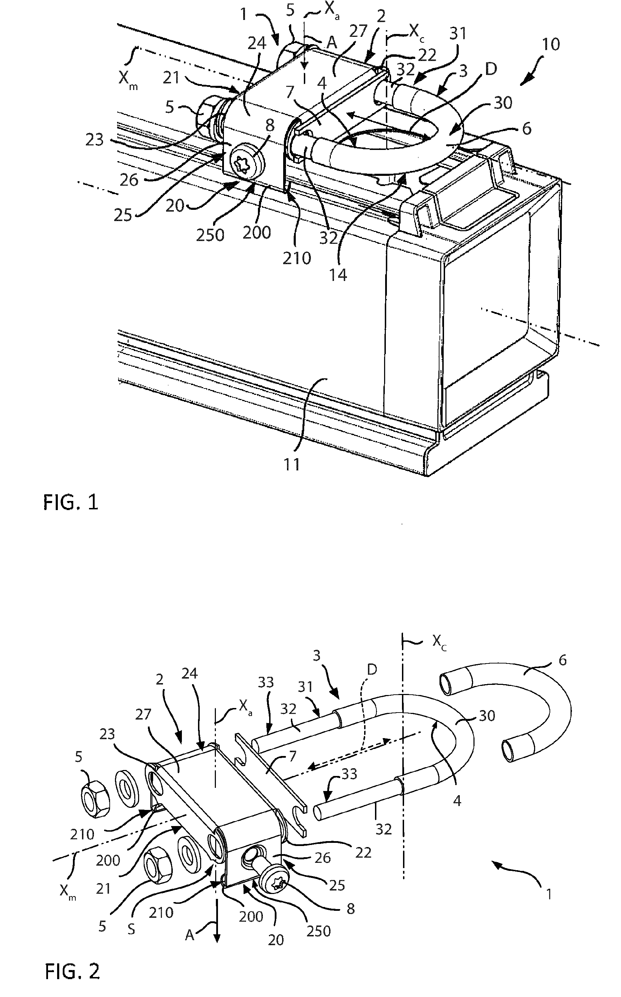

The base element 2 comprises a fixing section 20 to attach the cable restraint unit 1 to a luminaire body 11 of a luminaire 10, as exemplarily shown in figs. 1, 3, 4, 8 and 9.

The base element 2 further comprises a support section 21, as will be described in more detail herein below.

The base element 2 may comprise a base body 24 connecting, preferably integrally connecting, the fixing section 20 and the support section 21 (see, e.g. fig. 1 and 2). The base body 24 may comprise a side wall section 25, wherein the fixing section 20 can be provided at a distal tip end 250 of the side wall section 25 (or its side walls 26, as described further herein below) with respect to the support section 21.

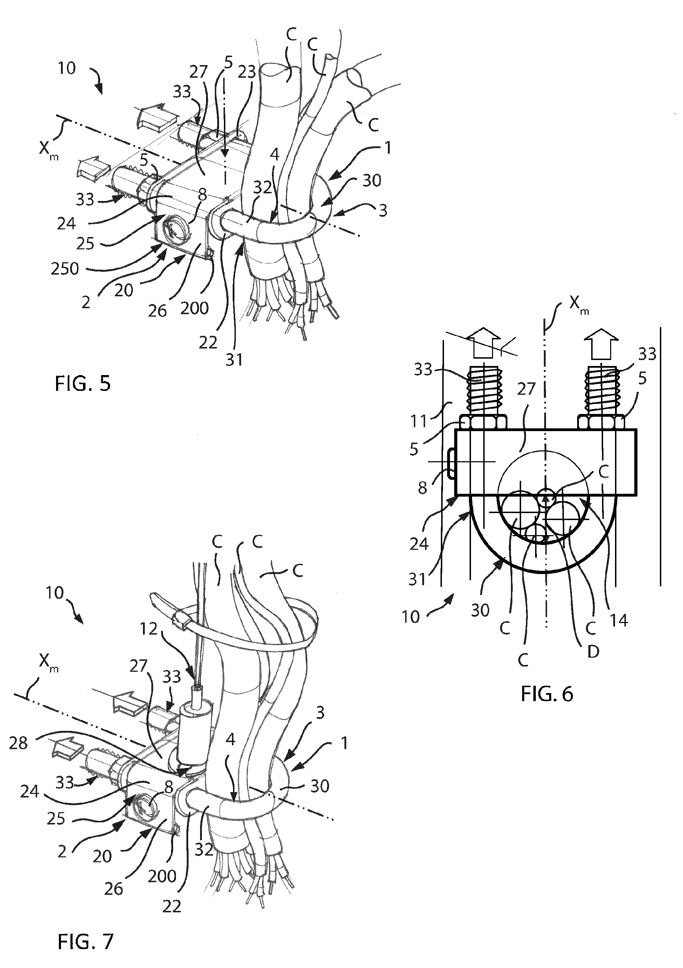

As shown in fig. 7, the base element 2, preferably its base body 24, may comprise an attachment section 28 for attaching a luminaire suspension 12.

The base element 2 may be a snap-on element, as will be described in further detail herein below.

The clamping element 3 has a curved section 30 facing (towards) the support section 21 and being bulged away from it so as to delimit a cable guide opening 4 therebetween for guiding through cables C along a cable guide axis Xc, as exemplarily derivable from all figures.

The clamping element 3 is connected to the base element 2 in a movable manner along a moving axis Xm so as to selectively change the distance D between the support section 21 and the curved section 30 and thus selectively vary the size of the cable guide opening 4; i.e. increase the distance D to increase the size of the cable guide opening 4 or decrease the distance D and thus decrease the size of the cable guide opening 4.

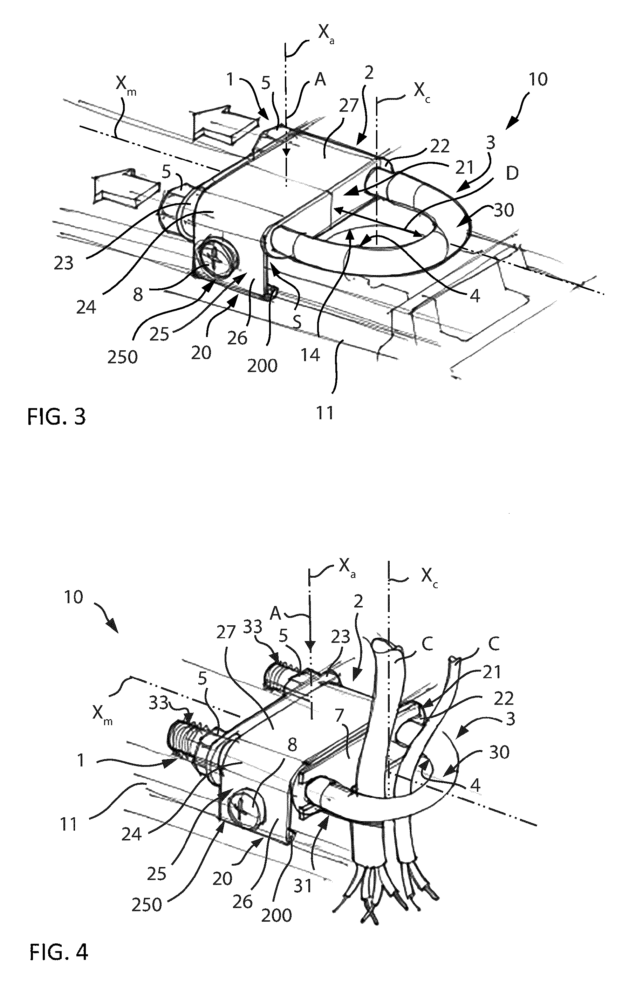

The moving axis Xm may extend orthogonal to the cable guide axis Xc, as derivable from figs. 3-6.

The clamping element 3 may further comprise a guide section 31 for movably connecting the clamping element 3 to the base element 2 in a guided manner. With reference to the figures and clearly depicted in fig. 2, the guide section 31 may comprise two legs 32 both extending parallel to the moving axis Xm. The two legs 32 may laterally delimit the cable guide opening 4 between the base element 2 or support section 21 on the one hand and the curved section 30 on the other hand.

The guide section 31 and preferably the legs 32 may comprise threaded sections 33 penetrating the support section 21 so as to be fixed and movably adjusted by a counter element 5 (here a counter nut) at the side opposite to the cable guide opening 4 with respect to the support section 21, as can be best seen in figs. 3-7.

As can also be seen in figs. 1-6, the clamping element 3 may be a U-bolt.

As best seen in fig. 2, the support section 21 may comprise two support elements 22, 23 being offset along the moving axis Xm, both being penetrated by the clamping element 3, preferably its legs 32. A first one of the support elements (i.e. a first support element) 22 may delimit the cable guide opening 4, and a second one of the support elements (i.e. a second support element) 23 may be positioned opposite to the cable guide opening 4 with respect to the first support element 22 to support the counter element 5 at a side opposite to the first support element 22.

The clamping element 3, preferably at least its curved section 30 and more preferred also its guide section 31, can be jacketed with a sleeving 6, as clearly shown in fig. 2 and also derivable from figs. 1 and 3-6. The sleeving 6 may be supported against the support section 21 so as to be biased when moving the curved section 30 and the support section 21 towards each other; i.e. in a closed position.

With reference to fig. 2 and also shown in figs. 1 and 4, the cable restraint unit 1 may further comprise an isolation element 7 positioned between the support section 21 and the cable guide opening 4.

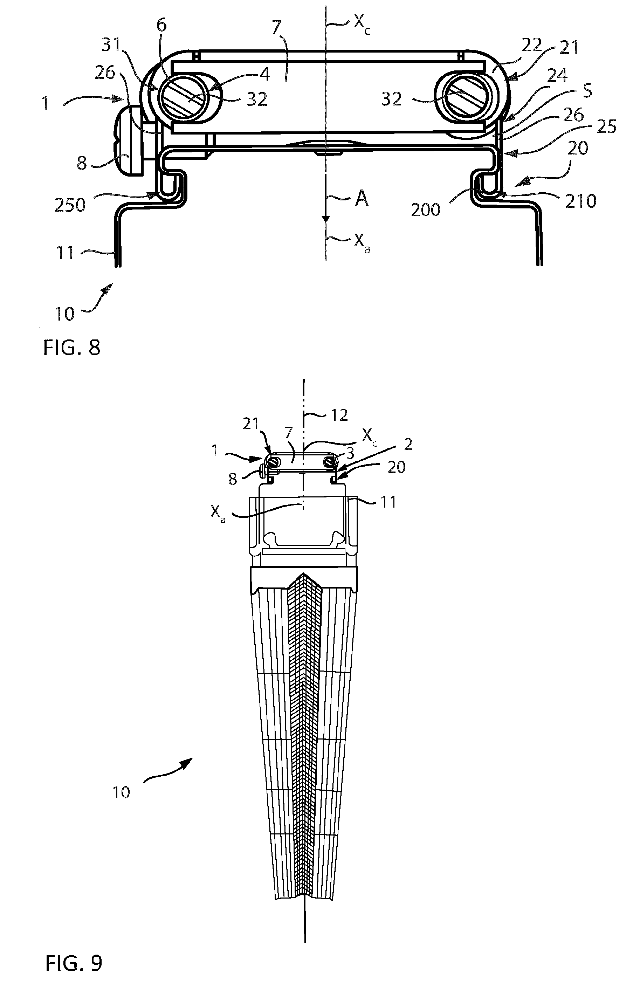

When viewed along the moving axis Xm (e.g. as shown in fig. 8), the base body 24 may have a substantially U-shaped cross-section delimiting a space S for receiving part of the clamping element 3 and/or of the luminaire body 11, as can be derived from figs. 1-9.

The side wall section 25 may comprise two side walls 26 being arranged opposite with respect to the space S. The side walls 26 may be connected by a connection wall 27 which together with the side walls 26 define the U-shaped cross-section of the base body 24.

The fixing section 20 may be designed such that the cable restraint unit 1 can be attached to a luminaire body 11 by an attachment movement A along an attachment axis Xa being parallel to the cable guide axis Xc or orthogonal to the moving axis Xm, as exemplarily indicated in fig. 8.

The fixing section 20 may comprise or is a clip or snap element, as can be best seen in fig. 8.

The fixing section 20 may comprise two fixing elements 200, preferably one at each side wall 26 if present. The fixing elements 200 may be offset from each other so as to receive part of a luminaire body 11 therebetween, as exemplarily derivable from fig. 8.

The fixing section 20 may be designed to allow slidable movement of the cable restraint unit 1 when being attached by the fixing section 20; this preferably orthogonal to the attachment axis Xa to attach the cable restraint unit 1 by the fixing section 20.

The fixing section 20 may comprise a profiled section 210 extending parallel to the moving axis Xm, preferably with a constant cross-sectional profile, as derivable from a combination of figs. 2 and 8.

The cable restraint unit 1 may further comprise a fixing part 8 being arranged to penetrate the base element 2 to selectively extend therein, preferably into the space S if present, as exemplarily derivable from fig. 8.

With reference to figs. 1 and 3-9, the luminaire 10 according to the invention is described.

The luminaire 10 comprises the cable restraint unit 1 according to the invention, as exemplarily described herein above. The luminaire 10 further comprises a/the luminaire body 11. The luminaire body 11 may be a longitudinal trunking and/or may be a profiled luminaire body 11, preferably with a constant cross-sectional body profile, as exemplarily derivable from a combination of figs. 1, 8 and 9.

The cable restraint unit 1 may be attachable or attached to the luminaire body 11 by the fixing section 20, as derivable from figs. 1 and 3-9.

The cable restraint unit 1 may be attachable or attached to the luminaire body 11 in a way that the cable guide opening 4 can be aligned with a cable through opening 14 of the luminaire body 11, when viewed or seen in the direction of the cable guide axis Xc, as exemplarily shown in figs. 1 and 3.

The cable restraint unit 1 may be attachable or attached to the luminaire body 11 by the fixing section 20 in a manner so as to be movable parallel to the moving axis Xm. This movability may also be used to allow the cable guide opening 4 be aligned with the cable through opening 14.

The cable restraint unit 1 may be attachable or attached to the luminaire body 11 by the fixing section 20 by way of a snap-on connection, as can be derived from fig. 8, for an ease of connection.

The cable restraint unit 1, when being attached to the luminaire body 11 by the fixing section 20 (see figs. 1 and 3-9) may be secured relatively to the luminaire body 11, preferably by the fixing part 8, as exemplarily depicted in fig. 8.

In the following, a method for providing a luminaire body 11 with a cable restraint unit 1 according to the invention is described.

In a first step, a luminaire 10 according to the present invention, as described exemplarily herein above, is provided.

In a second step, the cable restraint unit 1 is attached to the luminaire body 11 by the fixing section 20, as shown in any of figs. 1 and 3-9.

In a first optional step, the attached cable restraint unit 1 may be relatively slid to the luminaire body 11 by the fixing section 20, as exemplarily derivable from fig. 3.

In a second optional step, the cable guide opening 4 may be aligned with a/the cable through opening 14 of the luminaire body 11, which can also be derived from fig. 3.

In a third optional step, the cable restraint unit 1 may be relatively fixed to the luminaire body 11, preferably by the fixing part 8, as clearly shown in fig. 8.

In a third step, cables C are guided through the cable guide opening 4 along the cable guide axis Xc, as derivable from the combination of figs. 4 and 5.

In a fourth step, the clamping element 3 may be moved along the moving axis Xm so as to reduce the distance D between the support section 21 and the curved section 30 and thus to reduce the size of the cable guide opening 4 to secure / clamp the cables C between the curved section 30 and the support section 21, as derivable from figs. 5-7.

The present invention is not limited by the embodiments as described herein above as long as being covered by the appended claims.

## Claims

1. Cable restraint unit (1), comprising:
a base element (2) having
• a fixing section (20) to attach the cable restraint unit (1) to a luminaire body (11), and
• a support section (21),
a clamping element (3) having a curved section (30) facing the support section (21) and being bulged away from it so as to delimit a cable guide opening (4) therebetween for guiding through cables (C) along a cable guide axis (Xc),
wherein the clamping element (3) is connected to the base element (2) in a movable manner along a moving axis (Xm) so as to selectively change the distance (D) between the support section (21) and the curved section (30) and thus selectively vary the size of the cable guide opening (4).

2. Cable restraint unit (1) according to the previous claim, wherein the moving axis (Xm) extends orthogonal to the cable guide axis (Xc).

3. Cable restraint unit (1) according to any one of the previous claims, wherein the clamping element (3) further comprises a guide section (31) for movably connecting the clamping element (3) to the base element (2) in a guided manner,
wherein preferably the guide section (31) comprises two legs (32) both extending parallel to the moving axis (Xm), wherein more preferred the two legs (32) laterally delimit the cable guide opening (4) between the support section (21) and the curved section (30).

4. Cable restraint unit (1) according to any one of the previous claims, wherein the guide section (31), preferably the legs (32), comprise threaded sections (33) penetrating the support section (21) so as to be fixed and movably adjusted by a counter element (5), preferably a counternut, at a side opposite to the cable guide opening (4) with respect to the support section (21).

5. Cable restraint unit (1) according to any one of the previous claims, wherein the support section (21) comprises two support elements (22, 23) being offset along the moving axis (Xm), both being penetrated by the clamping element (3), preferably the legs (32), wherein a first one of the support elements (22) delimits the cable guide opening (4) and a second one of the support elements (23) is positioned opposite to the cable guide opening (4) with respect to the first support element (22) to support the counter element (5) at a side opposite to the first support element (22).

6. Cable restraint unit (1) according to any one of the previous claims, wherein the clamping element (3), preferably at least its curved section (30) and, if present, preferably also its guide section (31), is/are jacketed with a sleeving (6),
wherein preferably the sleeving (6) is supported against the support section (21) so as to be biased when moving the curved section (30) and the support section (21) towards each other.

7. Cable restraint unit (1) according to any one of the previous claims, further comprising an isolation element (7) positioned between the support section (21) and the cable guide opening (4).

8. Cable restraint unit (1) according to any one of the previous claims,
wherein the base element (2) comprises a base body (24) connecting, preferably integrally connecting, the fixing section (20) and the support section (21), wherein preferably the base body (24) comprises a side wall section (25), wherein the fixing section (20) is provided at a distal tip end (250) of the side wall section (25) with respect to the support section (21), and/or
wherein the base element (2), preferably its base body (24), comprises an attachment section (28) for attaching a luminaire suspension (12), and/or
wherein the base element (2) is integrally formed, preferably as a one-piece element, from a metal sheet, preferably from a spring steel sheet, and/or
wherein the base element (2) is a snap-on element.

9. Cable restraint unit (1) according to the previous claim, wherein, when viewed along the moving axis (Xm), the base body (24) has a substantially U-shaped cross-section delimiting a space (S) for receiving part of the clamping element (3) and/or of the luminaire body (11),
wherein preferably the side wall section (25) comprises two side walls (26) being arranged opposite with respect to the space (S), and the side walls (26) being connected by a connection wall (27) which together with the side walls (26) define the U-shaped cross-section of the base body (24).

10. Cable restraint unit (1) according to any one of the previous claims, wherein the fixing section (20) is designed such that the cable restraint unit (1) can be attached to a luminaire body (11) by an attachment movement (A) along an attachment axis (Xa) being parallel to the cable guide axis (Xc) or orthogonal to the moving axis (Xm), and/or
wherein the fixing section (20) comprises or is a clip or snap element, and/or
wherein the fixing section (20) comprises two fixing elements (200), preferably one at each side wall (26) if present, the fixing elements (200) being offset from each other so as to receive part of a luminaire body (11) therebetween.

11. Cable restraint unit (1) according to any one of the previous claims,
wherein the fixing section (20) is designed to allow slidable movement of the cable restraint unit (1) when being attached by the fixing section (20), preferably orthogonal to the attachment axis (Xa) to attach the cable restraint unit (1) by the fixing section (20), and/or
wherein the fixing section (20) comprises a profiled section (210) extending parallel to the moving axis (Xm), preferably with a constant cross-sectional profile.

12. Cable restraint unit (1) according to any one of the previous claims, further comprising a fixing part (8) to firmly fix the cable restraint unit (1) to the luminaire body (11) when being attached thereto by the fixing section (20),
wherein preferably the fixing part (8) is arranged to penetrate the base element (2) to selectively extend therein, preferably into the space (S) if present, and/or
wherein the fixing part (8) is or comprises a screw.

13. Luminaire (10), comprising
a luminaire body (11), and
the cable restraint unit (1) according to any one of the preceding claims being attachable to the luminaire body (11) by the fixing section (20).

14. Luminaire (10) according to the previous claim,
wherein the luminaire body (11) is a longitudinal trunking and/or is a profiled luminaire body, preferably with a constant cross-sectional body profile, and/or
wherein the cable restraint unit (1) is attachable to the luminaire body (11) in a way that the cable guide opening (4) can be aligned with a cable through opening (14) of the luminaire body (11), when seen in the direction of the cable guide axis (Xc), and/or
wherein the cable restraint unit (1) is attachable to the luminaire body (11) by the fixing section (20) in a manner so as to be moveable parallel to the moving axis (Xm), and/or
wherein the cable restraint unit (1) is attachable to the luminaire body (11) by the fixing section (20) by way of a snap-on connection, and/or
wherein the cable restraint unit (1), when being attached to the luminaire body (11) by the fixing section (20), is secured relatively to the luminaire body (11), preferably by the fixing part (8).

15. Method for providing a luminaire body (11) with a cable restraint unit (1), comprising:
• providing a luminaire (10) according to claim 13 or 14,
• attaching the cable restraint unit (1) to the luminaire body (11) by the fixing section (20),
• optionally sliding the attached cable restraint unit (1) relative to the luminaire body (11) by the fixing section (20),
• optionally aligning the cable guide opening (4) with a cable through opening (14) of the luminaire body (11),
• optionally fixing the cable restraint unit (1) relative to the luminaire body (11), preferably by the fixing part (8),
• guiding cables (C) through the cable guide opening (4) along the cable guide axis (Xc), and
• moving the clamping element (3) along the moving axis (Xm) so as to reduce the distance (D) between the support section (21) and the curved section (30) and thus reduce the size of the cable guide opening (4) to clamp the cables (C) between the curved section (30) and the support section (21).
